# EUROPEAN PATENT APPLICATION

(11) **EP 1 675 114 A2**
(43) Date of publication of application: **28.06.2006**
(21) Application number: 05027809.2
(22) Date of filing: 19.12.2005
(51) Int. Cl.: G11B 17/04

(54) **Electronic apparatus including a disc apparatus**

(30) Priority: 22.12.2004 JP 2004371198
(71) Applicant: ORION ELECTRIC CO., Ltd., Fukui 915-8555 (JP)
(72) Inventor: Nishide, Masahiko, c/o Orion Electric Company Ltd., Fukui-ken (JP); Makino, Takeshi, c/o Orion Electric Company Ltd., Fukui-ken (JP)
(74) Representative: Kirschner, Klaus Dieter

(57) **Abstract**

In a DVD apparatus configured so that a tapered inclined guide surface for guiding a disk outer circumferential edge and an inner wall surface arranged generally at right angle from a lower end of the inclined guide surface to a mount surface of the disk are formed, thereby positioning the disk relative to the disk tray, wherein a plurality of guide sections located on an opening side of the disk tray, which are obtained by extending a part of the inclined guide surface to protrude from an upper surface of the disk tray, are formed at predetermined intervals.

## Description

The present invention relates to a disk positioning means for carrying a disk into a disk apparatus with the disk mounted on a disk tray, and for positioning and mounting the disk on a turntable. More specifically, the present invention relates to an electronic apparatus that includes a disk apparatus that can be configured with a simple structure, that can easily and accurately correct a position of a displaced disk on the disk tray to a predetermined position, and that is excellent in practicability.

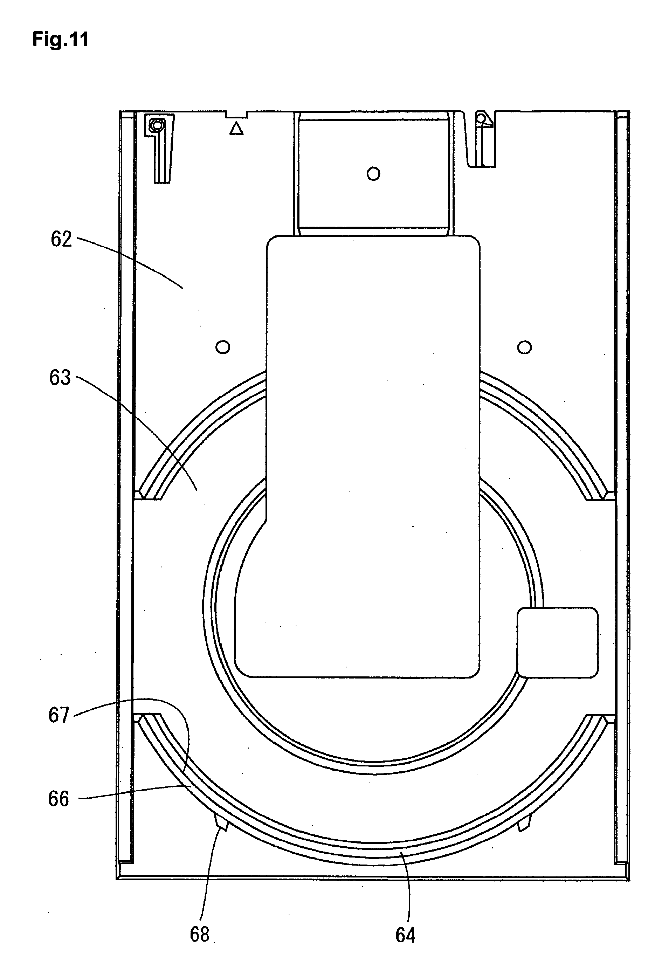

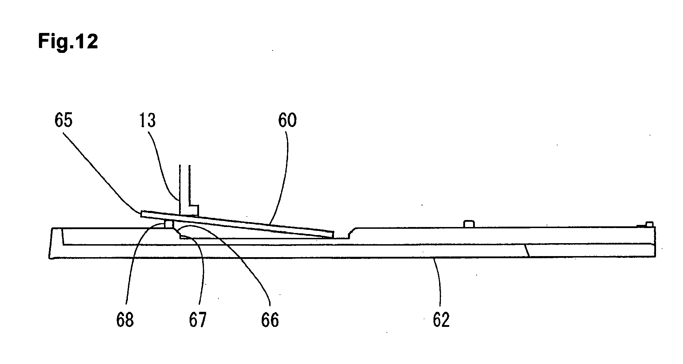

Conventionally, as positioning means for positioning a disk disposed in a disk apparatus, there is known one disclosed in, for example, Japanese Patent Application Laid-Open No. 2002-298488 entitled "DISK TRAY AND DISK APPARATUS INCLUDING THE DISK TRAY". As shown in Figs. 11 and 12, a disk apparatus including a disk tray 62 to be used for the disk apparatus, not shown, is disclosed, wherein an inclined guide surface 66 for guiding an outer circumferential surface 65 of the disk 60 to be loaded and an inner wall surface 67 formed continuously with a lower end of the inclined guide surface 66, facing the outer circumferential surface 65 of the disk 60 mounted on the disk tray 62, and substantially parallel to the outer circumferential surface 65 of the disk 60 are disposed on a disk mount section 64 of the disk tray 62. A walled disk detachment prevention member 68 perpendicular to a flat surface of the disk mount section 64 is provided at least on a part of an upper end of the inclined guide surface 66.

According to the conventional technique, the disk detachment prevention member 68 is provided on the upper end of the inclined guide surface 66 so as to prevent the disk 60 from being displaced and detached when the disk 60 is mounted on the disk mount section 64 of the disk tray 62 and the disk tray 62 is carried into the apparatus. The disk apparatus can serve as both a horizontal disk apparatus and a vertical disk apparatus. The disk detachment prevention member 68 is intended to prevent detachment of the disk 60 when the disk apparatus is provided vertically, and to function to guide the disk 60 to the disk loading position 63 when the disk apparatus is provided horizontally. If the apparatus is provided vertically, the disk detachment prevention member 68 is formed to be proximate to the disk outer circumferential surface 65 when the disk 60 is loaded at the disk loading position 63, arranged concentrically with a rotation axis of the disk 60, and formed perpendicularly to a flat surface of the disk 60. Due to this, there is no avoiding forming a gap between the disk outer circumferential surface 65 and the disk detachment prevention member 68 to be narrow, and it is necessary to take care of handling the disk 60 when the disk 60 is carried in the apparatus. Accordingly, if the disk 60 starts to be carried into the apparatus with the disk 60 mounted on the disk tray 62 while the disk 60 is caught in an upper end of the disk detachment prevention member 68 and struck on the vertically walled disk detachment prevention member 68 for some reason such as a failure to take care of handling the disk 60 when the disk 60 is mounted on the disk tray 62, the disk 60 is put between an opening 69, not shown, formed in a front panel of the disk apparatus and the disk detachment prevention member 68 formed on the disk tray 62. This may possibly cause a distortion of the disk 60, an abrasion or a damage on a disk recording surface, or the like.

The present invention has been achieved to solve the conventional disadvantage. Namely, according to the conventional technique, if the disk 60 starts to be carried into the apparatus with the disk 60 mounted on the disk tray 62 while the disk 60 is struck on the disk detachment prevention member 68 for such a reason as a failure to take care of handling the disk 60 when the disk 60 is mounted on the disk tray 62, the disk 60 is put between the opening 13 of the disk apparatus and the disk detachment prevention member 68 formed into a vertical wall to possibly cause the damage on the disk recording surface or the distortion of the disk 60.

It is an object of the present invention to provide an electronic apparatus including a disk apparatus that includes a disk tray configured with a simple structure, that can accurately and surely correct a position of a disk and guide the disk to a predetermined position even if the disk is carried into the apparatus while being displaced relative to the disk tray and projected from an inclined guide surface formed on the disk tray by reinforcing a function of the inclined guide surface, and that is easy to handle and excellent in practicability.

An electronic apparatus including a disk apparatus according to a first aspect of the present invention includes: an apparatus including an opening for loading a disk serving as a recording medium, and driving the disk to be rotated; a disk tray on which the disk is mounted, and which moves the disk from an outside of the apparatus into the apparatus through the opening; and a housing that supports the disk tray from both side surfaces of the housing so that the disk tray can be moved forward and backward, wherein a tapered inclined guide surface for guiding an outer circumferential edge of the disk, and an inner wall surface arranged generally at right angle from a lower end of the inclined guide surface to a mount surface of the disk are formed on the disk tray, thereby positioning the disk relative to the disk tray, and wherein a plurality of guide sections located on an opening side of the disk tray, which are obtained by extending a part of the inclined guide surface to protrude from an upper surface of the disk tray, are formed at predetermined intervals, thereby guiding the disk displaced from the inclined guide surface to an inside of the inclined guide surface.

According to a second aspect of the present invention, in the electronic apparatus including a disk apparatus of the first aspect, the guide sections are rib-shaped.

According to a third aspect of the present invention, in the electronic apparatus including a disk apparatus of the first aspect, the guide sections are formed to be broad from both side edges of the disk tray toward an inside of the disk tray.

According to the first aspect of the invention, a region for guiding the disk to the mount surface can be arranged with a simple construction and broadened toward the opening side of the disk tray, and the guide sections are formed to be higher than the upper surface of the disk tray. By so forming, even if the disk is displaced from the inclined guide surface and a part of the disk outer circumferential edge is located higher than the upper surface of the disk tray, the guide sections abut on the disk outer circumferential edge and can guide the disk displaced from the inclined guide surface to the inclined guide surface, hereby enabling the disk to be mounted on the mount surface surrounded by the inner wall surface.

According to the second aspect of the invention, even if the disk is mounted on the disk tray while being displaced from the inclined guide surface and projecting in a width direction of the disk tray, it is possible to guide the displaced disk to the inside of the inclined guide surface by the guide sections and a side surface of the housing as long as at least one of a plurality of rib-shaped guide sections abuts on the outer circumferential edge of the displaced disk. Since the disk can be mounted on the mount surface surrounded by the inner wall surface, it is possible to accurately guide the disk carried into the apparatus while being displaced from the inclined guide surface to the mount surface that is the predetermined position.

According to the third aspect of the invention, even if the disk is mounted on the disk tray while being displaced from the inclined guide surface, projecting in the width direction of the disk tray, it is possible to smoothly guide the disk mounted on the disk tray and displaced in the width direction of the disk tray to the inside of the inclined guide surface by the guide sections formed to be broad and tapered and the side surface of the housing as long as the tapered and broad guide sections abut on at least a part of the outer circumferential edge of the disk. Since the disk can be mounted on the mount surface surrounded by the inner wall surface, it is possible to accurately guide the disk carried into the apparatus while being displaced from the inclined guide surface to the mount surface that is the predetermined position.

Embodiments of the invetntion are now described with reference to the drawings enclosed, in which
Fig. 1 is an explanatory plan view that shows a schematic configuration of a disk tray of a DVD apparatus included in a television set according to a first embodiment of the present invention;
Fig. 2 is an explanatory side view of the disk tray according to the first embodiment of the present invention;
Fig. 3 is an explanatory cross-sectional view that shows a state in which a disk is mounted on the disk tray according to the first embodiment of the present invention;
Fig. 4 is an explanatory plan view that shows that the disk is mounted on the disk tray while the disk is displaced from an inclined guide surface and struck on a guide section according to the first embodiment of the present invention;
Fig. 5 is an explanatory plan view that shows that the disk is mounted on the disk tray while the disk is displaced leftward according to the first embodiment of the present invention;
Fig. 6 is an explanatory front view that shows that the disk is mounted on the disk tray while the disk is displaced leftward according to the first embodiment of the present invention;
Fig. 7 is an explanatory plan view that shows that the disk is mounted on the disk tray while the disk is displaced leftward, and that the disk tray is carrying the disk into the apparatus according to the first embodiment of the present invention;
Fig. 8 is an explanatory plan view that shows that the disk has been carried with the disk mounted on the disk tray, and that the disk carried into the apparatus while being displaced is positioned at a predetermined position according to the first embodiment of the present invention;
Fig. 9 is an explanatory perspective view that depicts the television set including the disk apparatus according to the first embodiment of the present invention;
Fig. 10 is an explanatory plan view of a disk tray according to a second embodiment of the present invention;
Fig. 11 is an explanatory plan view that shows a schematic configuration of a conventional disk tray; and
Fig. 12 is an explanatory cross-sectional view that shows a state in which a disk carried into the apparatus while being displaced is put between an opening and a disk detachment prevention member of the conventional disk apparatus.

As stated, the present invention relates to disk positioning means for carrying a disk into a disk apparatus with the disk mounted on a disk tray, and positioning and mounting the disk on a turntable. In addition, the present invention relates to an electronic apparatus including a disk apparatus that is configured with a simple structure and that can accurately correct a position of a disk displaced on the disk tray to a predetermined position. Embodiments related to a television set including a DVD disk apparatus (hereinafter, "DVD apparatus") configured so that the disk positioning means is formed on the disk tray for carrying a DVD disk (hereinafter, "disk") will be described hereinafter.

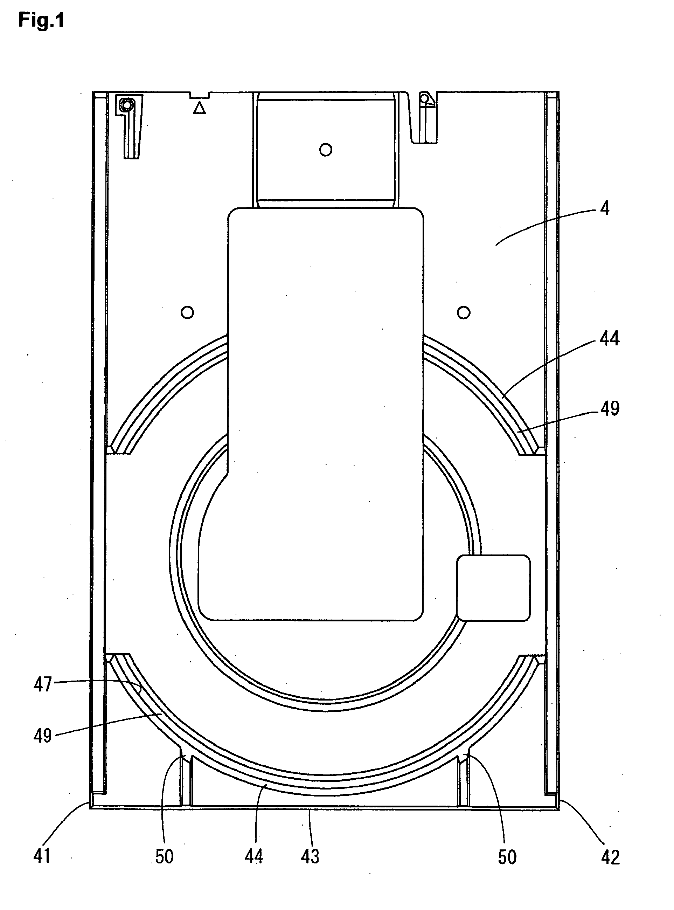

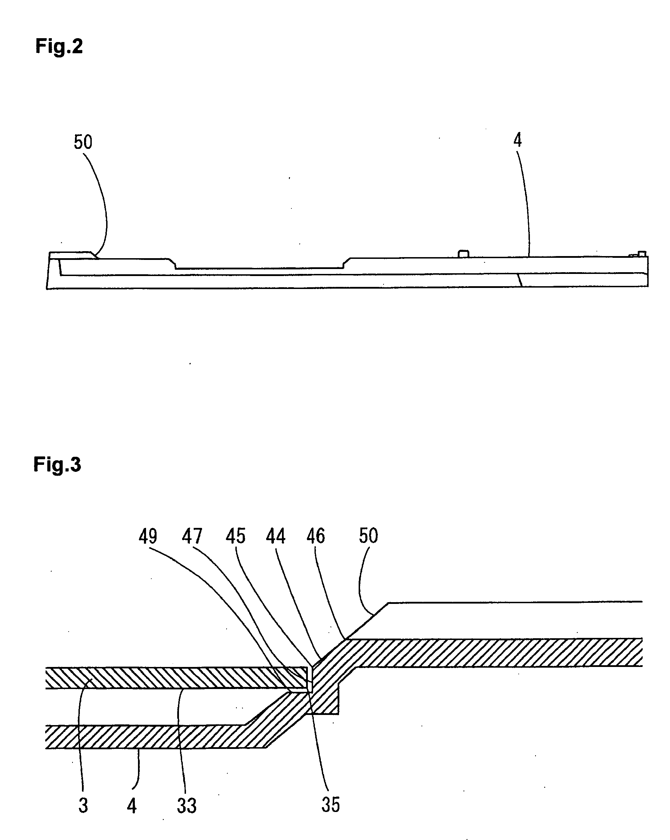

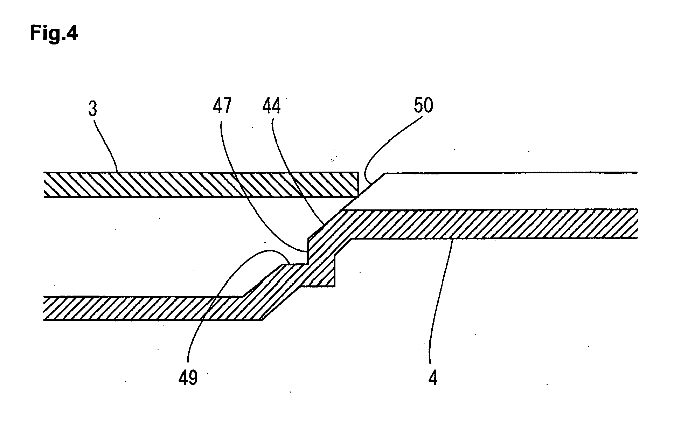

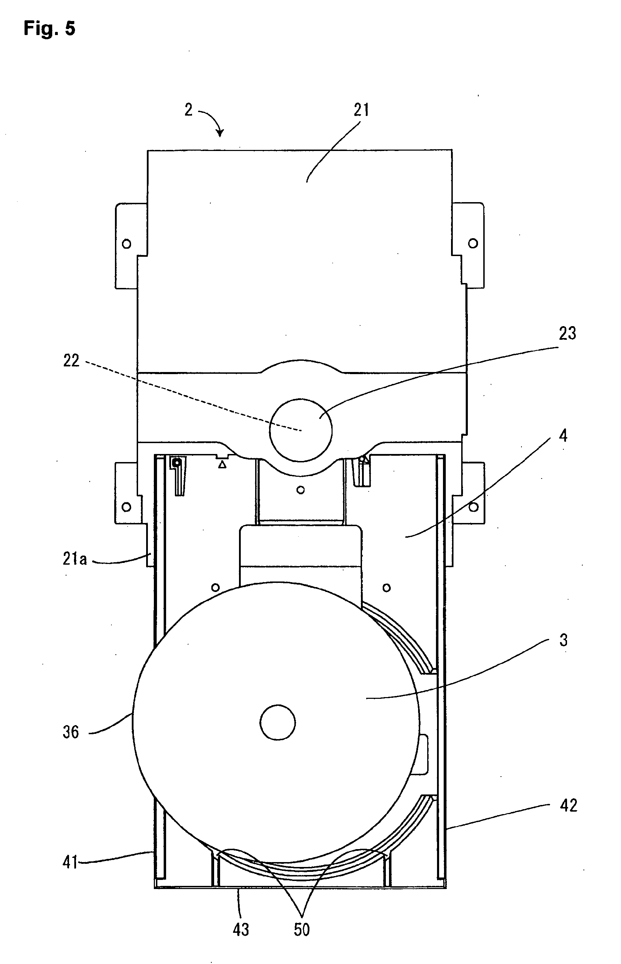

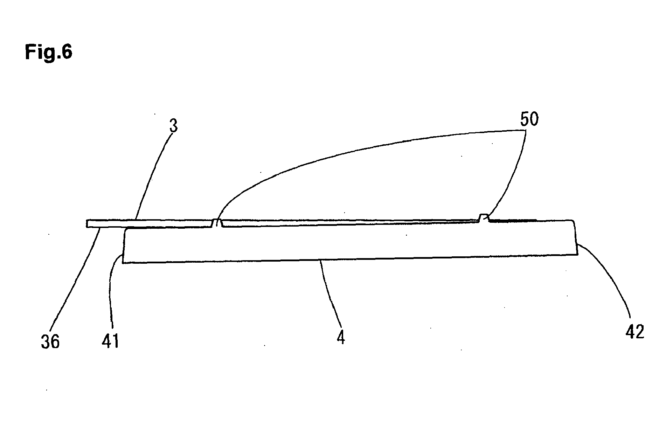

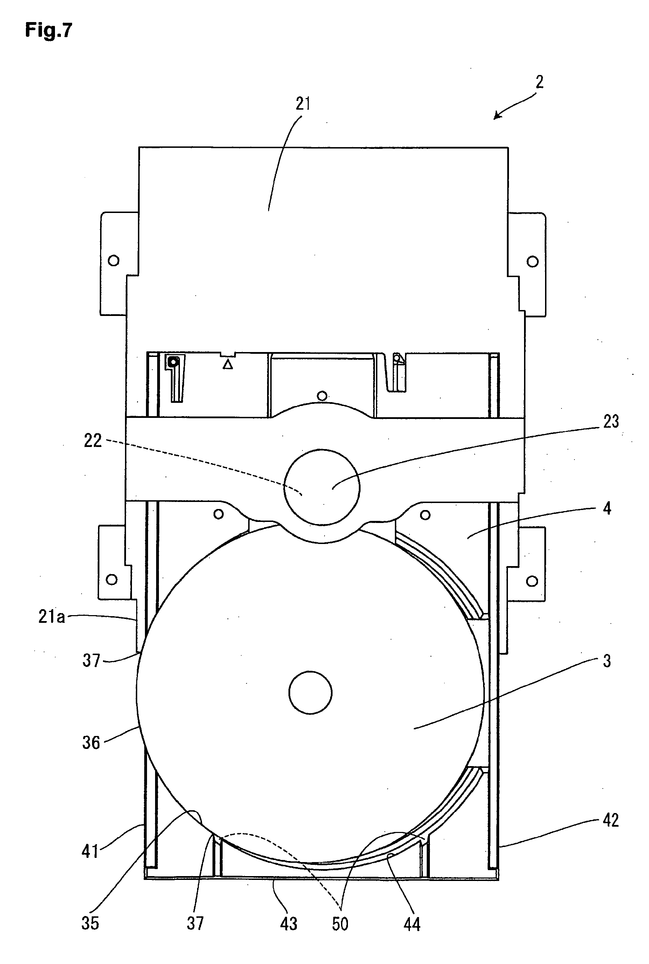

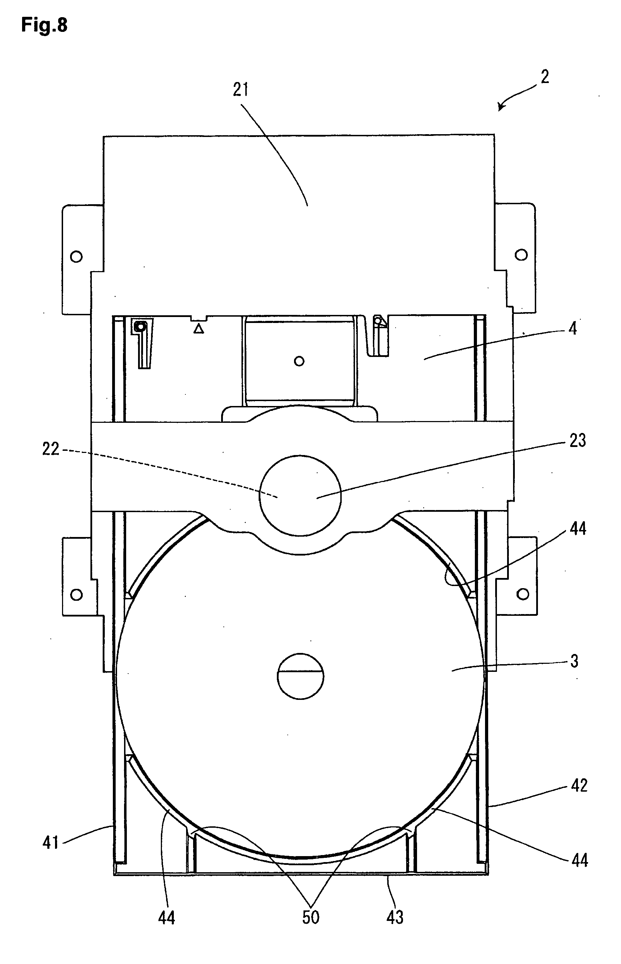

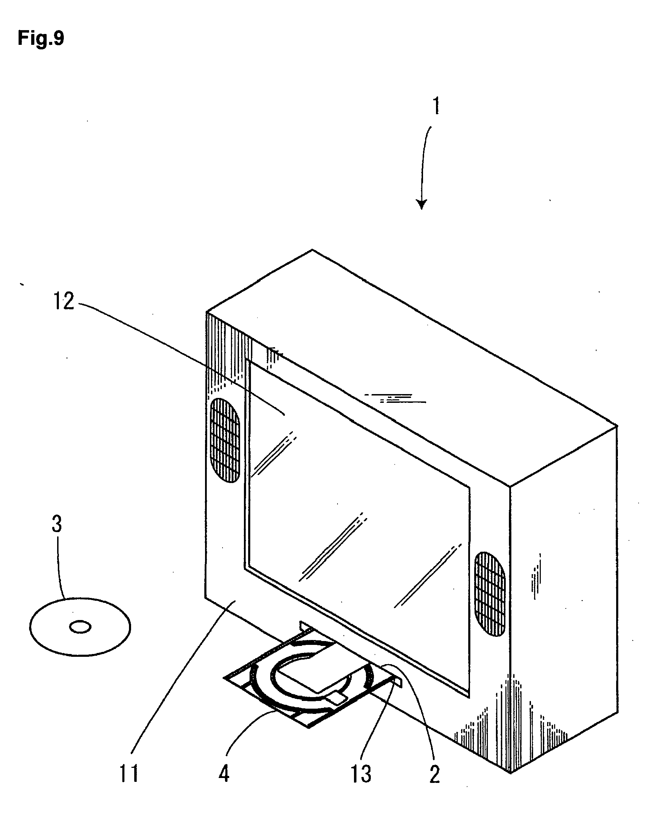

Fig. 1 is a plan view that shows a schematic configuration of a disk tray of a DVD apparatus included in a television set according to a first embodiment of the present invention. Fig. 2 is a side view of the disk tray. Fig. 3 is a cross-sectional view of the disk tray on which the disk is mounted. Fig. 4 is a cross-sectional view that shows that the disk is mounted on the disk tray while the disk is displaced and struck on a guide section. Fig. 5 is a plan view that shows that the disk is mounted on the disk tray while the disk is displaced leftward. Fig. 6 is a front view that shows that the disk is mounted on the disk tray while the disk is displaced leftward. Fig. 7 is a plan view that shows that the disk is being mounted on the disk tray while the disk is displaced leftward, and that the disk tray is carrying the disk into the apparatus. Fig. 8 is a plan view that shows a state in which the disk tray has been carried and in which the disk mounted on the disk tray while being displaced has been positioned on a mount surface. Fig. 9 is a perspective view that shows a television set including the DVD apparatus according to the present invention.

### (First Embodiment)

A television set 1 including a DVD apparatus 2 will be described with reference to Fig. 9. The DVD apparatus 2 is included in a front surface 11 of this television set 1, and an opening 13 through which a disk tray 4 for carrying a disk 3, which is a recording medium, is moved forward or backward is arranged in the front surface 11.

A schematic configuration of the DVD apparatus 2 will be described with reference to Fig. 8. This DVD apparatus 2 includes the disk tray 4 for carrying the disk 3 mounted thereon into this DVD apparatus 2, and a housing 21 that supports the disk tray 4 from both side surfaces by a guide rail, not shown, so that the disk tray 4 can be moved forward or backward. The DVD apparatus 2 is configured to mount the carried disk 3 on a turntable 22 and hold the disk 3 by a clamper 23.

Referring to Figs. 1 to 4, a configuration of the disk tray 4 for positioning the disk 3 at a predetermined position according to this embodiment will be described. As shown in Figs. 1 to 3, a tapered inclined guide surface 44 for guiding an outer circumferential edge 35 of the disk 3, and an inner wall surface 47 arranged generally at right angle from a lower end 45 of the inclined guide surface 44 to a mount surface 49 of the disk 3 are formed on the disk tray 4, wherein a guide section 50 obtained by extending a part of the inclined guide surface 44 to protrude from an upper surface 46 of the disk tray 4 is formed on each of a left side 41 and a right side 42 of an opening side 43 of the disk tray 4, respectively.

By thus locating a part of the inclined guide surface 44 on the opening side 43 of the disk tray 4 and extending the part of the inclined guide surface 44 to protrude from the upper surface 46 of the disk tray 4, a plurality of guide sections 50 for guiding the disk 3 displaced from the inclined guide surface 44 to an inside of the inclined guide surface 44 can be formed at predetermined intervals. Therefore, an area for guiding the disk 3 to the mount surface 49 can be broadened toward the opening side 43 of the disk tray 4. In addition, each guide section 50 is formed to be higher than the upper surface 46 of the disk tray 4. Due to this, as shown in Fig. 4, even if the disk 3 is displaced from the inclined guide surface 44 and a part of the disk outer circumferential edge 35 goes up higher than an upper surface of the inclined guide surface 44, the guide section 50 formed higher than the upper surface of the inclined guide surface 44 abuts on the disk outer circumferential edge 35 to guide the disk 3 displaced from the inclined guide surface 44 to the inside of the inclined guide surface 44. The disk 3 can be, therefore, mounted on the mount surface 49 surrounded by the inner wall surface 47.

Referring to Figs. 5 and 6, a state in which the disk 3 is mounted on the disk tray 4 while the disk 3 is greatly displaced from the inclined guide surface 44 to project toward the left side 41 will be described. As shown in Fig. 4, the disk 3 is displaced toward the left side 41 from the inclined guide surface 44, and projects to an outside of the disk tray 4, the state of which is indicated by a projecting portion 36 shown in Fig. 5. Fig. 6 shows the disk tray 4 and the disk 3 in a front view of Fig. 5, and shows a state in which the disk 3 projects toward the left side 41 of the disk tray 4.

A state in which the disk tray 4 starts to carry the disk 3 mounted thereon will be described with reference to Fig. 7. In Fig. 7, while the disk 3 mounted on the disk tray 4 and projecting toward the left side 41 of the disk 4 is in a process to be carried into the DVD apparatus 2, a side surface 21 a of the housing 21 abuts on the outer circumferential edge 35 of the disk 3 projecting toward the left side 41, and a left guide section 50 out of the two guide sections 50 formed to be higher than the upper surface 46 of the disk tray 4 abuts on a rear end of the disk outer circumferential edge 35, and the disk 3 is carried into the DVD apparatus 2 with the disk 3 mounted on the disk tray 4. This operation causes the outer circumferential edge 35 of the projected disk 3 to be pressed from abutment portions 37 of the housing side surface 21 a and an abutment portion 37 on a rear side (opening side 43).

An operation until the disk 3 is finished to be carried into the apparatus will be described with reference to Figs. 8 and 3. As described with reference to Fig. 7, the side surface 21 a of the housing 21 abuts on the outer circumferential edge 35 of the disk 3 projecting toward the left side 41, the left guide section 50 out of the two guide sections 50 formed to be higher than the upper surface 46 of the disk tray 4 abuts on the rear end of the disk outer circumferential edge 35, and the disk tray 4 carries the disk 3 into the DVD apparatus 2 with the disk 3 mounted thereon. This operation causes the projected disk outer circumferential edge 35 to be pressed from the abutment portions 37 of the housing side surface 21 a and the abutment portion 37 on the rear side (opening side 43), and forces the disk 3 into the disk tray 4, thereby roughly correcting a position of the disk 3. In addition, as shown in Figs. 8 and 3, the guide sections 50 and the inclined guide surface 44 guide the disk 3 to the mount surface 49 surrounded by the inner wall surface 47, whereby the disk 3 can be accurately positioned and supported on the mount surface 49. It is, therefore, possible to accurately mount the disk 3 on the turntable 22 arranged in the DVD apparatus 2 and hold the disk 3 by the clamper 23.

### (Second Embodiment)

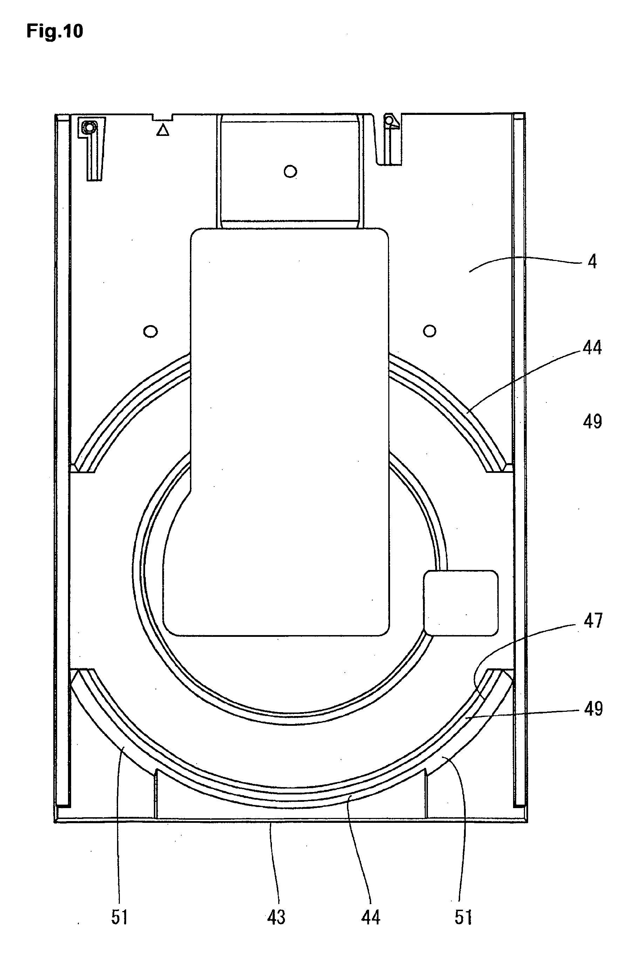

A second embodiment of the present invention will be described. Fig. 10 is a plan view of a disk tray 4 according to the second embodiment.

In the disk tray 4 shown in Fig. 10, guide sections 51 formed to be broader than the guide sections 50 formed left and right of the opening side 43 shown in Fig. 1, respectively, are arranged. By additionally providing the guide sections 51 on the tapered inclined guide surface 44 leftward and rightward of the opening side 43, respectively, the area for guiding the disk 3 to the mount surface 49 can be broadened toward the opening side 43 of the disk tray 4. In addition, an inclined surface of each guide section 51 can be formed higher than an upper end of the inclined guide surface 44. Due to this, while the disk 3 mounted on the disk tray 4 greatly displaced from the inclined guide surface 44 and projecting laterally from the inclined guide surface 44 is in a process to be moved and carried into the DVD apparatus 2, the side surfaces 21 a of the housing 21 shown in Fig. 7 abut on the outer circumferential edge 35 of the disk 3 projecting laterally, the guide sections 51 formed to be higher than the upper end of the inclined guide surface 44 abut on the rear end of the disk outer circumferential edge 35, and the disk tray 4 is then carried into the DVD apparatus 2. This operation causes the projecting disk outer circumferential edge 35 to be pressed against the side surfaces 21a of the housing 21 and the broad guide sections 51 from behind, roughly correcting the position of the disk 3. In addition, the guide sections 51 and the inclined guide surface 44 can guide the disk 3 to the mount surface 49 to accurately position and support the disk 3 on the mount surface 49. Besides, each of these guide sections 51 has an inclined and broad curved surface formed by extending the inclined guide surface 44. Due to this, by causing the guide sections 51 each having the inclined and broad curved surface to abut on the disk outer circumferential edge 35 and to guide the disk 3, the disk 3 can be smoothly guided. It is, therefore, possible to accurately and surely correct the position of the disk 3.

As stated so far, according to the first and second embodiments of the present invention, it is, therefore, possible to accurately and surely correct the position of the disk 3 mounted on the disk tray 4 while being displaced from the inclined guide surface 44 to the mount surface 49 which is the predetermined position. Accordingly, it is possible to prevent the disk 3 loaded while being displaced from being caught in the opening 13 of the television set 1 and distorted or damaged. Further, since both of the rib-shaped guide sections 50 according to the first embodiment and the broad guide sections 51 according to the second embodiment can be configured with the simple structure, a special cost for a disk displacement prevention structure for the disk 3 is not required. Thus, in the television set 1 including the DVD apparatus 2, the position of the disk 3 mounted on the disk tray 4 while being displaced from the inclined guide surface 44 can be accurately corrected to the mount surface 49 which is the predetermined position by the guide sections 50 or 51 formed on the disk tray 4 and the disk 3 can be mounted on the turntable 22 within the DVD apparatus 2. Therefore, a user of the television set 1 can easily load the disk 3 on the disk tray 4.

The embodiments of the present invention have been described thus far in detail. However, the present invention is not limited to the embodiments but various changes and modifications can be made of the present invention within the scope of the invention. For example, the electronic apparatus is not limited to the television set 1 including the DVD apparatus 2 but may be any electronic apparatus including the DVD apparatus 2 which can record or reproduce data independently. In addition, as long as the disk apparatus is an apparatus that includes the disk tray for carrying a disk-like recording medium, the disk apparatus may be an audio apparatus such as a CD player or an MD player. The guide sections 50 or 51 are not always formed as a pair, that is one at the left and one at the right, respectively. Even if two or more guide sections 50 or 51 are arranged at the left and at the right, respectively, it suffices that they are formed to be higher than the inclined guide surface 44 as much as possible. The arrangement of the guide sections 50 or 51 may be changed in view of a height restriction given to a design of the DVD apparatus 2 and appropriately selected without limitation to the embodiments.

The present invention is easily applicable to apparatuses or the like other than those described in the embodiments within the scope of the invention.

## Claims

1. An electronic apparatus including a disk apparatus comprising:
an apparatus including an opening for loading a disk serving as a recording medium, and driving the disk to be rotated;
a disk tray on which the disk is mounted, and which moves the disk from an outside of the apparatus into the apparatus through the opening; and
a housing that supports the disk tray from both side surfaces of the housing so that the disk tray can be moved forward and backward, wherein
a tapered inclined guide surface for guiding an outer circumferential edge of the disk, and an inner wall surface arranged generally at right angle from a lower end of the inclined guide surface to a mount surface of the disk are formed on the disk tray, thereby positioning the disk relative to the disk tray, and
wherein a plurality of guide sections located on an opening side of the disk tray, which are obtained by extending a part of the inclined guide surface to protrude from an upper surface of the disk tray, are formed at predetermined intervals, thereby guiding the disk displaced from the inclined guide surface to an inside of the inclined guide surface.

2. The electronic apparatus including a disk apparatus according to claim 1, wherein
the guide sections are rib-shaped.

3. The electronic apparatus including a disk apparatus according to claim 1, wherein
the guide sections are formed to be broad from both side edges of the disk tray toward an inside of the disk tray.
